# EUROPEAN PATENT APPLICATION

(11) **EP 1 455 286 A1**
(43) Date of publication of application: **08.09.2004**
(21) Application number: 03405152.4
(22) Date of filing: 05.03.2003
(51) Int. Cl.: G06F 17/50

(54) **Computer-aided tendering of power supply facilities**

(71) Applicant: ABB Technology AG, 8050 Zürich (CH)
(72) Inventor: Bosshart, Peter, 5610 Wohlen (CH); Steiger, Martin, 8610 Uster (CH); Kieboom, Gerardus, 5417 Untersiggenthal (CH); Buri, Bruno, 5436 Würenlos (CH); Landert, Hans-Peter, 8610 Uster (CH)
(74) Representative: ABB Patent Attorneys

(57) **Abstract**

The invention relates to a data processing device, a method and a computer programme for computer-aided substation tendering. Conventional substation tenders rely on by-hand selection of components representing not-preengineered, not-reusable substation parts. Such tenders are inaccurate and time-consuming. In this disclosure a module (2) represents a reusable preengineered substation part and is indexed according to an intuitive multiple-index categorisation system (12), has a standardized name (14) for designating all its related files and for encoding its function in an intuitively understandable, and has a module-descriptor (3) providing standardised information (4-10) to application routines for cost calculation (1a), technical data accumulation (1d), graphics accumulation (1b) and tender text accumulation (1c). Two module types (2a, 2b) are provided: Core modules (2a) are structured in sub-modules (10) and articles (9) and allow cost calculation (1a) from bottom up; black-box modules (2b) are monolithic, as supplied from a third party, and have a cost attached to them. The modules (2a, 2b) and/or sub-modules (10) may be fixed or parametrisable. A module library (17) and browser (11) assist in storage and retrieval of the modules (2).

## Description

### TECHNICAL FIELD

The invention refers to the field of energy transmission and distribution in high-voltage and medium-voltage power supply networks and, in particular, to the domain of substation project planning. The invention relates to a data processing device, use, method and computer programme for computer-aided tendering of power supply facilities, such as substations, according to the preamble of the independent claims.

### BACKGROUND OF THE INVENTION

DE 42 09 168, referred to as closest state of the art, discloses a method for an automatic project planning of substation control systems. The project planning tools comprise a basic programme and a library of programme modules that have a general functionality and can be linked together to build functions or steps in sub-procedures. The library is based on object-oriented data modelling. The programme modules are accessible from different access or user levels. The access levels are defined hierarchically such that only predetermined procedures, sub-procedures or information can be obtained from a certain level. The programme modules can be linked together recursively to build programme modules themselves. Programme modules in one access level interact, and in particular exchange information, with one another dynamically.

On the lowest access level a basic programme module stores knowledge for modelling the substation control system, such as discretionary operating means and operating means information of the control system and/or the substation. In addition, the basic programme module generates access or input modules with user interfaces for accessing the stored knowledge. On the second level an access module generates or duplicates application-specific information (e. g. choice of language) stored in different basic programme modules. As well, a plurality of basic modules may be generated that represent specific components or device families (e.g. for protection and control) of the control system. The input modules give access to the substation manufacturer on the first and second level, and to the end user, e. g. the design engineer or client, on the third level. Operational data for the substation control system can be generated from the substation by a generator. As a major drawback the design engineer is lacking any direct access to programme modules and can only indirectly manage the design process through inputting substation-descriptive information. Thus he has very limited input and design options.

The operation of the project planning system comprises: parametrisation of substation information, automatic design of the substation control system, automatic generation of substation diagrams, determination of operating conditions for substation switchboard sections, automatic determination of hardware for assembling the substation, generating tendering information and drawings. Substation parameters obtained during planning can be transferred to hardware components of the substation. Data transparency is achieved in all project phases by object-oriented data handling in connection with universally useable programme modules providing hierarchical parameter inheritance.

EP 1 265 333 discloses a method, programme and system for automatically configuring a part of a power supply network without expert knowledge about hardware components to be used. A configuration model describing all possible configurations is defined, requirements to be fulfilled by the configurations are defined, and an optimal configuration is determined that optimizes at least one characteristic value, e. g., besides electro-technical parameters, manufacturing costs, space requirements, reliability, risk, efficiency, and/or maintenance costs, of the configuration. In addition, a simulation model for simulating a technical behaviour of the optimized configuration can be determined automatically.

EP 0 803 964 discloses a method and system for manufacturing a power converter by using a design assistance computer to select, based on operating characteristic information and optimization criteria, an optimal power converter configuration from a set of available converter configurations. Specifications, including availability and/or cost information, of the selected configuration may be forwarded to the client for approval, and fabrication information for the selected configuration may be delivered to a manufacturing facility. An assembling step may include a step of generating a bill of materials for the selected power converter configuration and, in addition, a step of sending the bill of materials to a computer-integrated manufacturing line.

The above state of the art is focused on automatic design tools for configuring power supply facilities or components. Such design tools comprise module libraries that are rather inflexible to handle and difficult to maintain.

### BRIEF SUMMARY OF THE INVENTION

It is a general object of the invention to provide, in particular in the domain of substation project planning, a data processing device, its use, a method and a computer programme for an improved tendering process. This object is achieved according to the invention by the subject-matter as set forth in the independent claims.

In a first aspect the invention consists in a data processing device for computer-aided tendering of power supply facilities, in particular substations, comprising computing means and a module library for storing programme modules, briefly called modules, representing pre-engineered parts of the facility, which modules can be retrieved from the library for being used in projecting the facility, wherein the modules are categorised using a multiple-index categorisation system that is immediately accessible by an operator who projects the facility and the modules are equipped with unified software interfaces to application routines that, when executed on the projected facility, create tendering information about the projected facility. Data processing device signifies a computing system having software and hardware, such as standard software installations (e. g. MS-Office and Intranet access) and preferably a CAD-system (e.g. Bentley microstation V8) for composing drawings. A module represents a part, i.e. a component or functional unit, of the facility on a basic or composite level. Thus a basic or atomic module may simply signify an article representing e. g. an appliance or single component. A composite module may comprise a plurality of articles and/or sub-modules comprising themselves articles and/or sub-modules and may represent a composite appliance unit or complex component of the facility.

The multiple-index categorisation system offers the user, typically a tendering engineer, a plurality of intuitive searching indices for each module and supports a fast and accurate search for desired known or unknown modules. A further improvement is the automatic interfacing of the selected modules to desired application routines. The consistent categorisation and interfacing of modules allows their systematic reuse in project planning and provides a comfortable programming environment to the operator. Overall, the tendering process is accelerated and its quality is improved in all tendering steps, in particular during browsing, assembling, parametrising and modifying modules and when executing application routines on a project.

In first embodiments each module is attached in the categorisation system at least three independent searching indices characterising at least a discipline, a function and a technical specification of the pre-engineered part within the facility, and/or, based on the categorisation system, a module browser with navigator for categorising and searching modules in the library is provided. The triple indexing and the browser assist the tendering engineer in identifying, understanding and remembering modules and thus improve the reusability of modules.

In second embodiments the modules are typified as core modules, which comprise, in particular consist of, sub-modules and/or articles, and as black-box modules, which are freely definable from a user interface or are predetermined by a supplier. From a module developer's perspective, core modules are transparent down to a sub-module and/or article level, whereas black-box modules are either monolithic or may comprise an enumeration of subparts, thus representing simple or complex parts of the facility. Black-box modules are particularly suited to represent components from sub-suppliers that are bought as integral parts and shall be treated accordingly. The combination of core and black-box modules in a common module library with a uniform categorisation system allows to treat structured and monolithic modules as well as own and third-party modules in the same manner in all tendering steps. The operator has thus available a wide range of adaptable parts and can handle different sub-supplier deliverable policies uniformly. Modification of existing modules, integration of newly defined or missing or elsewhere available modules and maintenance of stored modules in general is facilitated, as well.

In a further embodiment core modules are attached cost information by means of a bill of quantity comprising a number of occurrences of articles or article-numbers and/or sub-modules containing articles or article-numbers, wherein cost information about the articles is available from an article database, and black-box modules are attached cost information by assigning the cost immediately, in particular integrally or subpart-wise, to the black-box modules themselves. The sub-modules may comprise the articles immediately or via recursive definitions of sub-submodules etc.. The cost information is thus available in a uniform format e. g. to a cost calculation routine and can easily be updated or changed by an operator. An additional advantage may be that the article database can contain, besides prices per unit, technical manuals of articles and that the article database can be delivered, for example electronically, by the sub-supplier of the articles to the data processing device.

In another embodiment the modules are typified as rigid modules, which are unchangeable from a user interface, and as parametrisable modules, which have a parameter or parameter set that is changeable from a user interface. Due to the parametrisation of both core and black-box modules the total number of modules in the library can be reduced. In particular, in parametrisable core modules a sub-module may have a parameter or parameter set that is changeable from a bill of quantity from which the sub-module can be called. Thus, the parameter or parameter set of the sub-module affects the bill of quantity of the sub-module itself. This feature can drastically reduce the number of sub-module types needed for modelling the core modules.

The embodiments according to claims 6-7 have the advantage that tendering information is created automatically, efficiently and without complicated input required from the operator and that all tendering information is bundled and brought into a format immediately deliverable to clients, for example in electronic form or on paper.

The embodiments according to claim 8 have the advantage that guidelines for efficient modularisation of facilities are made explicit through definition rules for module boundaries. The definition rules assure that modules fit in the categorisation system and/or represent technical functions in the facility, that module data, such as single-line diagrams and 3D-drawings, bills of quantity, tender text information and technical data, can be defined coherently and in agreement with the module boundaries, and that the size and number of stored modules can be optimized.

The embodiment according to claim 9 has the advantage that modules downloaded into a project are frozen in. This prevents unwanted up-dates of downloaded modules and allows transparent adjustments of modules stored in the library without affecting existing tendering projects.

In a further aspect the invention relates to a use of the data processing device, as described above, for computer-aided tendering of power supply facilities.

In another aspect the invention relates to a method for tendering a power supply facility, wherein a data processing device comprising a module library for storing programme modules that represent pre-engineered parts of the facility is present, the method comprising the steps of searching and downloading modules from the library and projecting the facility, wherein the modules are searched in the library by an operator using a multiple-index categorisation system and application routines are run by the operator on the modules of the projected facility to create tendering information about the projected facility.

In yet another aspect the invention relates to a computer programme for tendering power supply facilities comprising computer programme code means that are loadable and executable in a data processing device and that, when loaded and executed, cause the device to perform the steps of the method or implement the features of the data processing device described above. Computer programme shall also signify a computer programme product being loadable into an internal memory of a digital computer and comprising the aforementioned computer programme code means.

### BRIEF DESCRIPTION OF THE DRAWINGS

The invention will be better understood and become more apparent when consideration is given to the following detailed description thereof. Such description makes reference to the annexed drawings, which are schematically showing in
- Fig. 1a: a modular substation concept providing a module reuse-environment;
- Fig. 1b: a legend for the modular substation concept;
- Fig. 2: an embodiment of a multiple-index categorisation system;
- Fig. 3: a comparison of two different modularisation strategies;
- Fig. 4: an exemplary embodiment of a core module; and
- Fig. 5-7: schematic flow charts and diagrams of the tendering method.

In the drawings identical parts are designated by identical reference numerals.

### DETAILED DESCRIPTION OF THE INVENTION

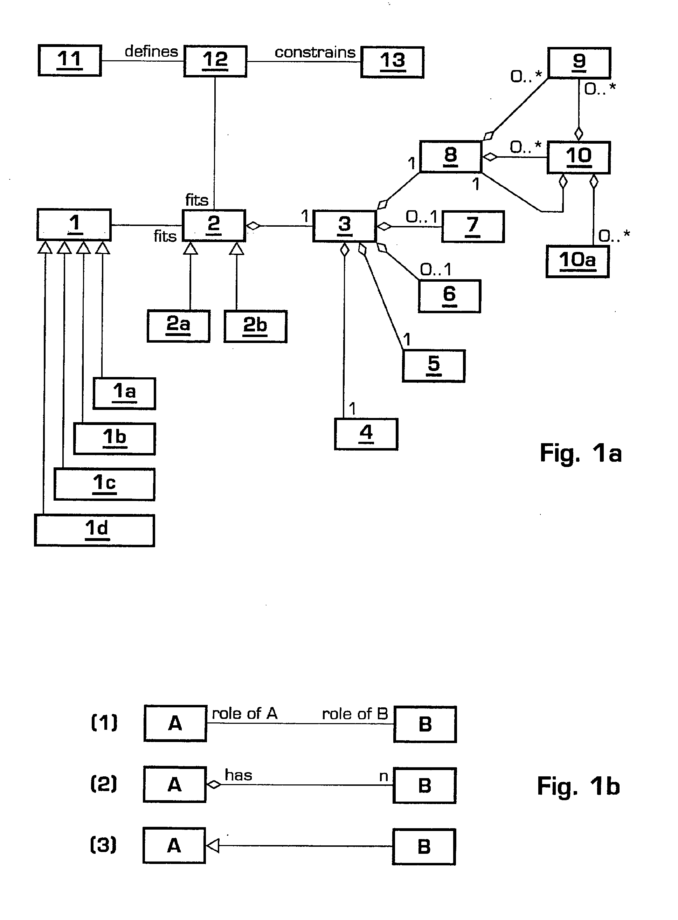

Fig. 1a in connection with Fig. 1b displays an exemplary embodiment of a modular substation concept providing a module reuse environment. Note that according to Fig. 1b three types of relationships are shown using UML symbols: (1) signifies a definable dependency between A and B, for example "role of B = fits" means "B fits A"; (2) signifies "A has always 1 B" (n=1), "A may have zero or one B" (n=0..1), "A may have zero or any number of B" (n=0..*); and (3) "B is an implementation or specialisation of A".

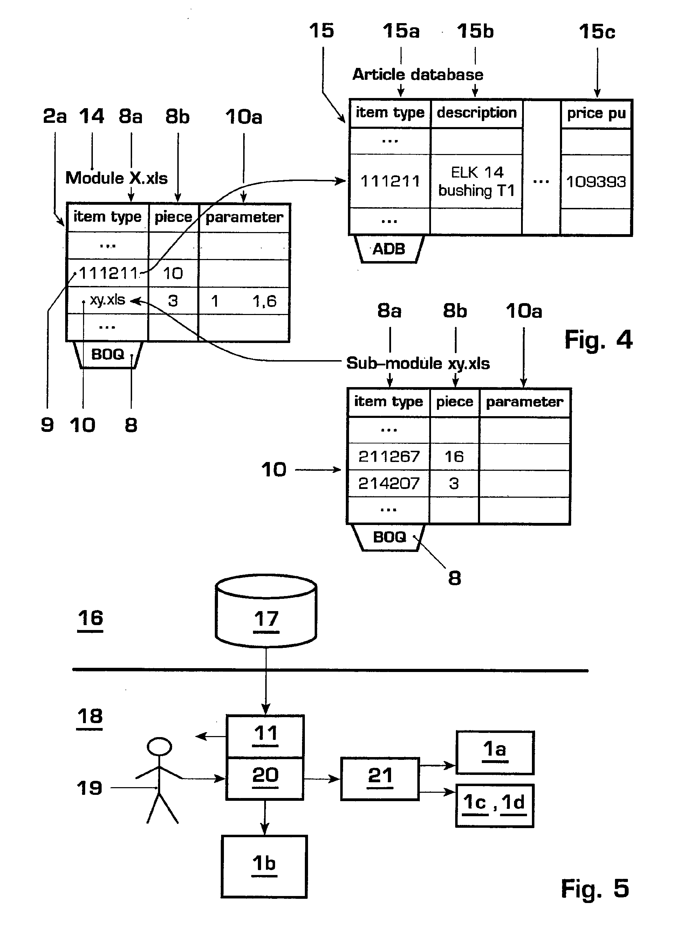

Modules 2 representing pre-engineered reusable parts of the substation or facility, in general, shall fit a categorisation system 12, which defines a module browser 11 and which is constrained by modularisation rules 13. The rules 13 make the substation domain analysis explicit and assure a consistent categorisation of the modules 2. The categorization system 12 serves primarily for accessing modules 2 in the module library 17 (Fig. 5-7). Stated differently, the categorisation 12 is compatible with the rules 13 and is used to construct a module browser 11 for comfortable searching through the library 17. Preferably, the EBNF (extended Backus Naur formalism) is used to generate and maintain the categorisation system 12 and a module designation system. The EBNF allows, for example, to check with a parser whether a category or module name is defined correctly and is admissible. As an alternative to EBNF, graphic representations can be used as well.

Every module 2 has a module-descriptor 3 comprising standardized module data 4-10 characterising the module 2. In the preferred embodiment of Fig. 1 every module 2 always has an information unit called module-descriptor 3 that gathers consistent aspects 4-10 of a module 2. These aspects 4-10 comprise always a tender text 4, always technical data 5, optionally a single-line diagram 6 and/or a 3D-drawing 7 and always a bill of quantity 8. The bill of quantity 8 has any number of articles 9 or sub-modules 10 which themselves have each exactly one bill of quantity 8. The bill of quantity 8 must comprise prices 15c of articles 9 and/or sub-modules 10 (Fig. 4). The tender text 4 may contain a scope of supply prepared for a client, a description of sub-modules 10 or articles 9 of the module 2, and/or technical manuals of articles 9 (not shown). The recursive module definition 8-10 is favourable in modularising a complex substation. Due to this flexible mechanism modules 2 of arbitrary granularity can be developed and maintained with reasonable effort.

The standardized module data 4-10 further provide standardized interfaces to the application routines 1 for delivering the data 4-10 to the routines 1. Therefore the modules 2 fit to all application routines 1, in particular to a cost calculation routine 1a, a diagram or drawing accumulation routine 1b, a tender text accumulation routine 1c, and/or a technical data accumulation routine 1d.

The modules 2 are either structured core modules 2a or unstructured black-box modules 2b. The core type modules 2a consist of a known number of articles 9 and/or sub-modules 10. With respect to black-box modules 2b, the sub-supplier gives a complete price for a whole package and/or a price list of certain sub-parts, if desired. It is not the tendering engineer's responsibility to know the bill of quantity 8 and article costs of such black-box modules 2b. However, he can define black-box modules 2b himself and can insert or alter their price or price list. The introduction of distinct core and black-box module types 2a, 2b facilitates the incorporation of out-of-house components in projecting substations for tendering purposes.

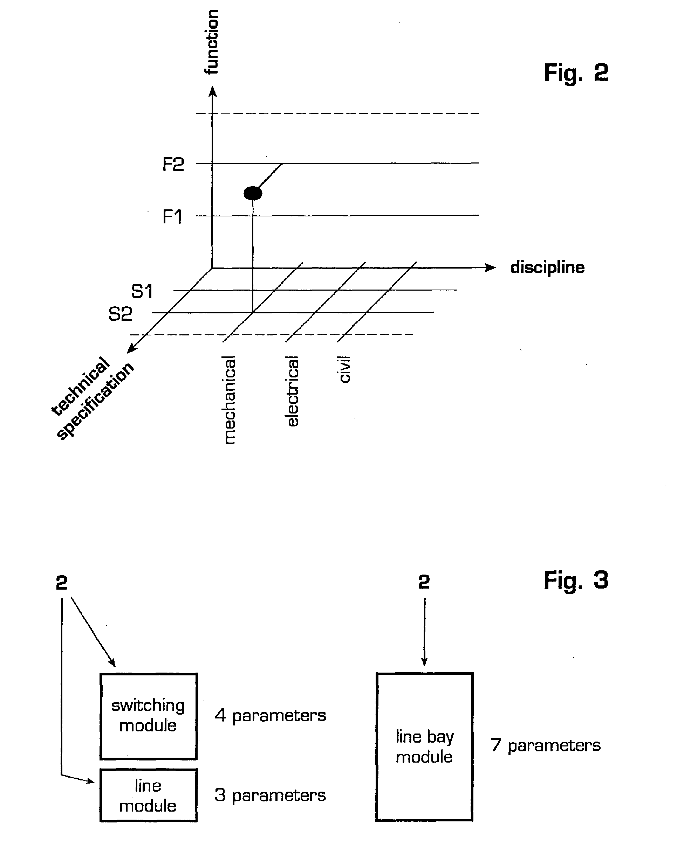

Fig. 2 shows a preferred three-dimensional categorisation index space. A discipline index, a function index and a specification index are provided with. Theses indices take in principle independent values, but not every point in the index space represents a desirable or feasible module 2. The discipline index is either "civil", "electrical" or "mechanical". The specification index values S1, S2, ... represent each a technical parameter or parameter set, such as voltage and current level, bus bar design, or space requirements. The specification index may provide sub-categories to the discipline index. For example, "civil" may comprise sub-categories building (e. g. GIS (=gas insulated switchgear) building, control building, other), duct, foundation (e. g. buildings, equipment, reactor, transformer), and other. "Electrical" may comprise sub-categories representing secondary equipment, such as control and protection, station control system, low voltage AC, and low voltage DC. "Mechanical" may comprise sub-categories representing primary equipment, such as cables, GIS (e. g. substation topology, in particular single bus bar or SBB, double bus bar or DBB, 1½ circuit breaker or ring configuration), and outdoor or AIS (=air insulated switchgear) (e. g. creepage distance, voltage and current ratings), reactors (e. g. creepage distance, power ratings), and transformers (e. g. creepage distance, power ratings). The function index values F1, F2, ... represent a technical function, such as busbar coupler, duct, intermediate, line, neutral, measuring, reactor, switch, transformer, special, line take off yard, or control and protection.

Preferably, module boundaries are defined to coincide with physical boundaries of a component or functional unit of the facility, with a sub-supplier's area of responsibility, and/or with existing module boundaries. In order to delimit a total number of modules 2 stored in the library 17, the invention provides parametrisable modules 2, in particular of both core and black-box module type 2a, 2b, as well as greatest possible freedom to select module boundaries.

Fig. 3 shows an example, how module boundaries determine the number of module classes and of modules 2 to be stored in the library 17. A module class named "switching module" having four digital parameters (e. g. SBB/DBB, fast/normal acting earthing, line disconnector none or one (0/1), and current transformers one or two (1/2)) and a module class named "line module" having three parameters (e. g. line trap 0/1, voltage transformer 1/3 phase, empty/not empty) result in a total of 2⁴+2³=24 stored modules 2. In contrast, a single module class "line bay module" having all seven parameters results in 2⁴*2³=128 stored modules 2.

Fig. 4 shows for a core module 2a with module-name 14 an exemplary bill of quantity 8 comprising an item type list 8a of articles 9 and/or sub-modules 10, a corresponding piece list 8b, and a parameter list 10a attached to sub-modules 10, if they are parametrisable. The item type list 8a is linked, on one hand, to an article database 15 comprising itself a corresponding item type list 15a with an article description list 15b, other lists (if applicable) and a price per unit list 15c, and, on the other hand, to the bill of quantity 8 of sub-modules 10 comprising themselves a corresponding item type list 8a and a piece list 8b and being linked themselves to an article database 15 (not shown).

Fig. 5 shows a rough scheme of the data processing device. A module development area 16 is provided that comprises the module library 17 and software tools (not shown) for defining and/or importing new modules 2 using the categorisation system 12. The modules 2 are stored in the library 17 in generic form and must be instanced (step 21) when used in a project. A project area 18 is provided that comprises a project memory space for downloading modules 2 from the library 17 for projecting and tendering purposes. The browser 11 presents previews of modules 2 to the tendering engineer 19 and allows selection 20 and adaptation 20 of modules 2, instancing 21 of modules 2 by assigning them a module type, a module number and, in the case of parametrisable modules 2, a module parameter setting, and finally applying the routines 1a-1d. Preferably, modules 2 are automatically detached from the library 17 upon downloading, and their related cost information is automatically copied from an article database 15 into the project and can, in particular, be changed by the operator 19. The project working area 18 is thus strictly separated from the module library 17, thus preventing unwanted up-dates in a running substation project.

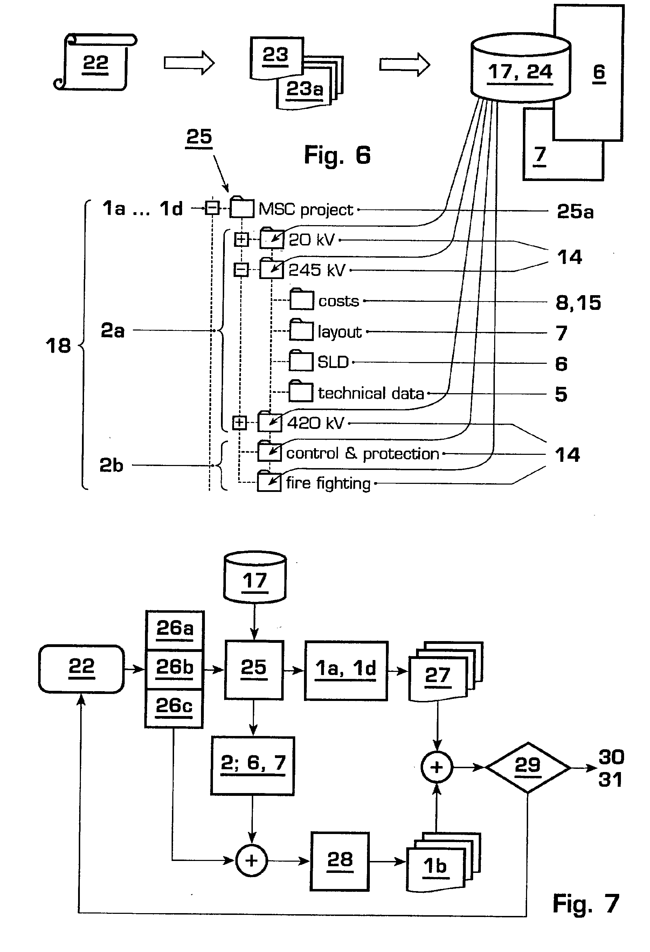

Fig. 6 shows schematically an implementation in a preferred windows environment using de-facto standard office software. Customer requirements 22 are compared to and implemented in a components specification database 23 and, in particular, in switchgear data component specifications 23a. In order to be accessible from anywhere, in particular, via internet or intranet, the generated module library 17 is stored for example on an FTP-server 24. In addition, the module library 17 may also be implemented within the standard file system of any standard operating system. Read-only access is given to tender engineers 19 and read-and-write access to module developers. Access can be given worldwide either with a Microsoft internet explorer or Netscape which allow viewing and saving the files locally. The module engineer 19 can use any FTP-protocol for up- and down-load purposes. There are two possibilities to retrieve modules 2 from the library 17: Either the modules 2 are stored on the FTP-server 24 in a folder structure, which allows the operator 19 to find the modules 2 following a path according to the categorisation system 12, or, for easier access, the library 17 can be browsed with a navigator 11, which shows previews of the module files 4-10. With the preview the operator 19 sees what he gets. Time-consuming opening of CAD files can be avoided. In the library 17, only the latest revisions of modules 2 are stored and modules 2 have neither a numbering system nor a revision handling. In a real project, where modules 2 are used, the normal project numbering system and revision handling of projects applies.

Preferably a hierarchical project folder structure 25 has a project folder with project name 25a and contains module folders 2a comprising module files with related cost information 8, 15, in particular bills of quantity 8 and article or cost databases 15, with 3D-drawings 7, single-line diagrams 6 and technical data 5. The application routines 1a-1d are executed on the whole project folder 25 and create further documents. Preferably, cost calculation 1a is made on EXCEL, such that the tendering engineer 19 has all numbers under control. All documents are electronically readable. The implementation using standard software tools renders the tendering device and method economic, fast and compatible with low business volume.

Every module 2 has a module-name 14 for designating all its related files and for encoding its function in an intuitively understandable way. And preferably, the module-name 14 is chosen according to an elaborate module designation system of the modular substation concept. Every module 2 has three corresponding files: The file "name_des.xls" contains bill of quantity 8, tender text 4, references to technical documents 5, the file "name.dgn" contains a 3D drawing 7 and/or a single-line diagram 6 for primary technical parts, and the file "name.jpeg" contains previews for the module browser 11 for drawings 7 and diagrams 6. 3D-drawings allow for arbitrary sections and views and allow to represent all objects of a substation. Both drawings 7 and diagrams 6 are realised with e. g. a Bentley, Microstation V8 drawing tool.

Fig. 7 shows a simplified flow chart of the tendering process steps. The customer requirements 22 are analysed and transcribed by the operator 19 into a single-line diagram sketch 26a, a layout 26b, and into switchyard data 26c of the substation to be offered. These data 26a, 26b, 26c are implemented on a local drive in a project folder 25. The project folder 25 is populated by modules 2 found in the module library 17 and linked to the application routines cost calculation 1a and technical data accumulation 1d, and to a generator for single-line diagram and 3D-layout modules 6, 7. The output 27 of the cost and technical data routines 1a, 1d comprise a detailed and complete bill of quantity 8, costs and technical data of the complete substation, filtering possibilities for modules 2, an ABB work breakdown structure number or numbers (=WBS), currencies, etc. The graphic modules 6, 7 are accumulated, according to the data 26a, 26b, 26c and by using a CAD-tool 28, by hand and preferably aided by a drawing accumulation routine 1b. The combined output is checked, typically by hand, for completeness and plausibility 29 and serves as input 30 to an offer calculation tool 31.

In a second aspect the invention relates to method for tendering a power supply facility, wherein a data processing device comprising a module library 17 for storing programme modules 2 that represent pre-engineered parts of the facility is present, the method comprising the steps of searching and downloading modules from the library and projecting the facility, wherein the modules are searched in the library by an operator using a multiple-index categorisation system and application routines are run by the operator on the modules of the projected facility to create tendering information about the projected facility.

Preferably, a module browser interface is presented to the operator which provides for each module at least three independent searching indices characterizing a discipline, a function and a technical specification of the module and/or a module name encoding its function in an intuitively understandable way and/or a preview of files related to the module and/or a module-descriptor comprising standardized module data is automatically interfaced via a standardized interface to the application routines for delivering the module data to the routines.

In a third aspect the invention relates to a computer programme and computer programme product for enabling the above-described data processing device or for executing the above-described method for tendering power supply facilities.

While there are shown and described and pointed out the fundamental novel features of the invention as applied to the preferred embodiment, it will be understood that various omissions and substitutions and changes of the form and details of the device illustrated and in its operation may be made by those skilled in the art, without departing from the spirit of the invention and within the scope and range of equivalents of the claims.

### List of Reference Symbols

- 1: application routines
- 1a: cost calculation routine
- 1b: drawing accumulation routine
- 1c: tender text accumulation
- 1d: technical data accumulation
- 2: programme module, module
- 2a: core-type module
- 2b: black-box module
- 3: module-descriptor
- 4: tender text
- 5: technical data
- 6: single-line diagram
- 7: 3D-drawing
- 8: bill of quantity
- 8a: item type
- 8b: quantity
- 9: article
- 10: sub-module
- 10a: parameter for sub-module
- 11: browser (with navigator)
- 12: categorisation system
- 13: modularisation rules
- 14: module name
- 15: article database, cost database
- 15a: article type
- 15b: description
- 15c: price per unit
- 16: module development area, module library area
- 17: module library
- 18: project area, project planning and tendering area
- 19: operator, tendering engineer
- 20: selection of modules, adaptation of modules
- 21: instancing of modules
- 22: customer requirements
- 23: components specification database
- 23a: switchgear data component specifications
- 24: implementation of library, FTP-server
- 25: project folder structure
- 25a: project name
- 26a: sketch of single-line diagram
- 26b: layout
- 26c: switchyard data
- 27: output of application routines
- 28: computer aided design tool
- 29: completeness and plausibility checks
- 30: input to offer calculation tool
- 31: offer calculation tool

- F1, F2, ...: functions
- S1, S2, ...: technical specifications
- n: number index

## Claims

1. A data processing device for computer-aided tendering of power supply facilities, in particular substations, comprising computing means and a module library (17) for storing programme modules (2) representing pre-engineered parts of the facility, which modules (2) can be retrieved from the library (17) for being used in projecting the facility, **characterised in that**
a) the modules (2) are categorised using a multiple-index categorisation system (12) that is immediately accessible by an operator (19) who projects the facility and
b) the modules (2) are equipped with unified software interfaces to application routines (1a,...1d) that, when executed on the projected facility, create tendering information about the projected facility.

2. The data processing device as claimed in claim 1, **characterised in that**
a) in the categorisation system (12) each module (2) is attached at least three independent searching indices characterising at least a discipline, a function and a technical specification of the pre-engineered part within the facility and/or
b) based on the categorisation system (12) a module browser (11) with navigator for categorising and searching modules (2) in the library (17) is provided.

3. The data processing device as claimed in any of the preceding claims, **characterised in that** the modules (2) are typified as core modules (2a), which comprise sub-modules (10) and/or articles (9), and as black-box modules (2b), which are freely definable from a user interface or are predetermined by a supplier.

4. The data processing device as claimed in claim 3, **characterised in that**
a) core modules (2a) are attached cost information by means of a bill of quantity (8) comprising a number of occurrences of article-numbers and/or sub-modules (10) containing article-numbers, and cost information (15c) about the articles (9) is available from an article database (15), and
b) black-box modules (2b) are attached cost information by assigning the cost immediately, in particular integrally or subpart-wise, to the black-box modules (2b) themselves.

5. The data processing device as claimed in any of the preceding claims, **characterised in that**
a) the modules (2) are typified as rigid modules (2a), which are unchangeable from a user interface, and as parametrisable modules (2), which have a parameter or parameter set that is changeable from a user interface and
b) in particular that in parametrisable core modules (2) a sub-module (10) may have a parameter or parameter set (10a) that is changeable from a bill of quantity (8) from which the sub-module can be called.

6. The data processing device as claimed in any of the preceding claims, **characterised in that**
a) the application routines (1a,...1d) comprise routines for automatic cost calculation (1a), for tender text accumulation (1c), for technical data accumulation (1d) and, in particular, for drawing accumulation (1b and/or
b) every module (2) has a module-descriptor (3) comprising standardized module data (4-10) characterising the module (2) and providing a standardized interface to the application routines (1a,...1d) for delivering the module data (4-10) to the routines (1a,...1d).

7. The data processing device as claimed in claim 6b, **characterised in that**
a) the standardized module data (4-10) comprise: a bill of quantity (8) and prices (15c) of articles (9) and/or sub-modules (10), technical data (5), a tender text (4) and optionally a single-line diagram (6) and/or 3D-drawing (7) and/or
b) a tender text (4) contains a scope of supply, a description of sub-modules (10) or articles (9) of the module (2), and/or technical manuals (5) of articles (9).

8. The data processing device as claimed in any of the preceding claims, **characterised in that** module boundaries are defined to coincide with physical boundaries of a component or functional unit of the facility, with a sub-supplier's area of responsibility, and/or with existing module boundaries.

9. The data processing device as claimed in any of the preceding claims, **characterised in that**,
a) a module development area (16) is provided that comprises the module library (17) and software tools for defining and/or importing new modules (2) using the categorisation system (12) and/or
b) a project area (18) is provided that comprises a project memory space for downloading modules (2) from the library (17) for projecting and tendering purposes.

10. Use of a data processing device as claimed in any of the preceding claims for computer-aided tendering of power supply facilities, in particular substations.

11. A method for tendering a power supply facility, wherein a data processing device comprising a module library (17) for storing programme modules (2) that represent pre-engineered parts of the facility is present, the method comprising the steps of searching and downloading modules (2) from the library (17) and projecting the facility, **characterised in that**
a) the modules (2) are searched in the library (17) by an operator (19) using a multiple-index categorisation system (12) and
b) application routines (1a,...1d) are run by the operator (19) on the modules (2) of the projected facility to create tendering information about the projected facility.

12. The method as claimed in claim 11, **characterised in that**
a) a module browser interface (11) is presented to the operator (19) which provides for each module (2) at least three independent searching indices characterizing a discipline, a function and a technical specification of the module (2) and/or a module-name (14) encoding its function in an intuitively understandable way and/or a preview of files related to the module (2) and/or
b) a module-descriptor (3) comprising standardized module data (4-10) is automatically interfaced via a standardized interface to the application routines (1a,...1d) for delivering the module data (4-10) to the routines.

13. The method as claimed in any of the claims 11-12, **characterised in that** upon downloading a module (2) into a project
a) the module (2) being stored in the library (17) in generic form is instanced by assigning it a module type, a module number and, in the case of parametrisable modules (2), a module parameter setting and/or
b) the module (2) is automatically detached from the library (17) and related cost information is automatically copied from an article database (15) into the project and can, in particular, be changed by the operator (19).

14. A computer programme for tendering power supply facilities comprising computer programme code means that are loadable and executable in a data processing device and that cause, when loaded and executed, the device to perform the steps of the method as claimed in any of the claims 11-13.

15. A computer programme for tendering power supply facilities comprising computer programme code means that are loadable and executable in a data processing device and that implement, when loaded and executed, the features of the data processing device as claimed in any of the claims 1-9.
